# EUROPÄISCHE PATENTSCHRIFT

(11) **EP 1 211 832 B1**
(45) Veröffentlichungstag und Bekanntmachung des Hinweises auf die Patenterteilung: **28.02.2007**
(21) Anmeldenummer: 01000644.3
(22) Anmeldetag: 20.11.2001
(51) Int. Cl.: H04J 3/14, H04L 1/24

(54) **Verfahren zur Erzeugung von Testsignalen, Netzelement eines SDH-Netzes und SDH-Netz**
Method and device for generating test signals, network element of a SDH network and SDH network
Procédé et dispositif de géneration de signaux de test, élément de réseau HNS et réseau HNS

(30) Priorität: 30.11.2000 DE 10059558
(43) Veröffentlichungstag der Anmeldung: 05.06.2002
(73) Patentinhaber: SIEMENS AKTIENGESELLSCHAFT, 80333 München (DE)
(72) Erfinder: Sedlmayr, Johannes, 86916, Kaufering (DE)

(56) Entgegenhaltungen:
- EP-A- 0 765 049
- EP-A- 0 849 972
- EP-A- 1 014 610
- WO-A-94/13073
- DE-C1- 4 423 014
- US-A- 5 726 991

## Beschreibung

Die Erfindung betrifft ein Netzelement eines SDH-Netzes, zur Weiterleitung von, vorzugsweise hochbitratigen, Signalen, mit einem empfangsseitigen Eingang, einem sendeseitigen Ausgang, und mindestens einer Überwachungsvorrichtung, die einen Fehler eines Signals erkennt und diesen Fehler meldet, indem ein Alarm ausgegeben wird. Weiterhin betrifft die Erfindung ein SDH-Netz mit einer Vielzahl von Netzelementen, mit einem empfangsseitigen Eingang und einem sendeseitigen Ausgang, wobei die Netzelemente über Datenleitungen miteinander verbunden sind, und einem Mittel zur Einspeisung von Testsignalen in den Empfangsweg der Netzelemente.

Die Erfindung betrifft darüber hinaus ein Verfahren zur Erzeugung von Testsignalen innerhalb eines SDH-Netzes, wobei die Testsignale mindestens einem Netzelement des SDH-Netzes zugeleitet werden.

Die Synchronous Digital Hierarchy (SDH) ist ein Übertragungssystem, das in dem Bereich der nationalen und internationalen Weitverkehrsnetze die derzeit bestehende Übertragungsinfrastruktur, die auf der Basis von Plesiochronous Digital Hierarchy (PDH) arbeitet, ablöst. Mit der SDH-Technik lassen sich eine Vielzahl von Leistungsmerkmalen erreichen. Beispiele hierfür sind weltweit standardisierte und einheitliche Bitraten, ein byteweises Multiplexen, ein direkter Zugriff auf ein Nutzsignal ohne mehrstufiges Demultiplexing, Over-head-Bytes für eine Netzsteuerung OAM (Operation, Administration and Management), Ersatzschaltungen, Qualitätsmanagement und Dienstkanäle, ein vereinfachtes Multiplexschema, Netzsynchronität durch eine zentrale Taktbasis, sowie geringe Verzögerungszeiten bei dem Einfügen und dem Auskoppeln (Add/Drop) von Nutzsignalen.

Für die Übertragung von Informationen verwendet die SDH-Technik STM-Signale (STM = Synchronous Transport Modul), beispielsweise STM-1, STM-4, STM-16, STM-64 und so weiter. Das Grundelement STM-1 hat eine Übertragungsrate von 155,5 Mbit/s, wobei die höheren Übertragungsraten >STM-1, aus dem ganzzahligen Vielfachen dieser Grundrate gebildet werden und derzeit zum Beispiel bei 622 Mbit/s (STM-4), 2.5 Gbit/s (STM-16) und (STM-64) 10 Gbit/s liegen.

In der SDH-Technik werden Nutzsignale in einzelnen Rahmen übertragen, wobei jeder Rahmen verschiedene Bestandteile enthält, wie zum Beispiel einen Regenerator-Section-Overhead (RS-Overhead), einen AU-4-Pointer (AU = Administrative Unit), einen Multiplexer-Section-Overhead (MS-Overhead) und einen Nutzinhalt (Payload, Nutzdaten). Hierbei haben die Overhead-Bytes unter anderem Bedeutung für verschiedene Abschnitte einer Übertragungsstrecke des SDH-Netzes. Weiterhin erfolgt mittels der Overhead-Bytes eine Umschaltung auf Ersatzwege bei auftretenden Fehlern, eine Erkennung und Erfassung der Übertragungsqualität und eine Übertragung von OAM-Informationen. Der AU-4-Pointer kennzeichnet den Beginn der Nutzdaten. Diese Nutzdaten sind in sogenannten Containern oder Tributary Units (TU) verpackt.

Ein SDH-Netz besteht aus einem vermaschten Netz von Knoten (Netzelementen). Zum Test solcher SDH-Netze gehört unter anderem die Einspeisung von Fehlern und Alarmen in den Empfangsweg dieser Netzelemente, um deren Reaktionen hierauf zu prüfen. Hierzu werden heutzutage sogenannte SDH-Analyser verwendet, beispielsweise der Advanced Network Tester ANT-20 der Firma Wandel & Goltermann. Problematisch ist allerdings, daß sich bei höheren Bitraten, das heißt zum Beispiel für die Signale STM-16, STM-64 oder STM-256, der Aufwand für die SDH-Analyser enorm erhöht. In vielen Fällen steht solch ein entsprechender SDH-Analyser nicht zur Verfügung. In anderen Fällen stehen nicht genügend SDH-Analyser zur Verfügung, um die benötigte Anzahl von Testsignalen bereitzustellen.

Darüber hinaus ist für Netzelemente, die eine Funktion für die Fehlerkorrektur (FEC = Forward Error Correction) besitzen, der Einsatz eines SDH-Analysers nicht möglich, wenn dieser die entsprechende Art der FEC nicht unterstützt. Bei Outband-FEC wird die Bitrate erhöht, um zusätzliche Redundanzinformationen zu übertragen, damit die Empfangsseite durch die Übertragung entstandene Bitfehler korrigieren kann. Bei Inband-FEC wird die Redundanzinformation mittels unbenutzter Overhead-Bytes (RS- oder MS-Layer) übertragen. Handelsübliche SDH-Analyser unterstützen diese Funktionen jedoch nicht.

Ein weiterer Nachteil bei der Verwendung von SDH-Analysern zur Einspeisung von Testsignalen in SDH-Netze besteht darin, daß bestehende Leitungen getrennt werden müssen, um den SDH-Analyser in das SDH-Netz einzufügen. Dies bedeutet zum einen einen großen Arbeitsaufwand, zum anderen wird eine zusätzliche Komponente benötigt.

In EP 0 849 972 A2 ist ein sendeseitiger Signalgenerator mit einem empfangsseitigen angepassten Signaldetektor zur Kontrolle einer Leitung zwischen Netzknoten zur Übertragung hochbitratiger Signale dargestellt. Der Signalgenerator erzeugt in einer abwechselnden weise mittels einer zufälligen Testsignalgenerierung logische Werte in der Virtual-Container-Ebene eines übertragenen SDH-Signals. Wird diese Generierung nicht empfangsseitig korrekt detektiert, wird ein Problem bei der kontrollierten Leitung erkannt.

Aus DE 44 23 014 C1 ist ein Verfahren zur individuellen Überprüfung von Adernvertauschung in Leitungsabschnitten einer Nachrichtenübertragungsstrecke bekannt. Dafür wird eines oder beide Paritätsbytes B1, B2 im Overhead eines Signals bei einem sendeseitigen Netzelement invertiert. Bei einem weiteren empfangsseitigen Netzelement wird diese Invertierung zur Überprüfung der korrekten Verdrahtung erkannt. Die Funktionsfähigkeit der Alarmierung lässt sich ebenfalls mittels einer Erkennung bzw. Ermittlung aufgetretener Bitfehler in mehreren aufeinander folgenden SDH-Rahmen mit einer B1-Invertierung überprüfen. Im Hinblick auf einer Überprüfung eines SDH-Netzes mit nun mehreren z. B. vermaschten Nachrichtenübertragungsstrecken werden weitere Tests bzw. Alarmierungen benötigt, die durch eine einzelne Verwendung einer Invertierung von Paritätsbits nicht ausreichend sind.

Es ist daher Aufgabe der Erfindung, ein Netzelement und ein SDH-Netz zu entwickeln, das auf einfache Weise eine Überprüfung des SDH-Netzes und seiner Netzelemente, auch bei hohen Bitraten, zum Beispiel bei Bitraten >STM-16, ermöglicht, ohne Leitungen zu trennen und eine zusätzliche Komponente in das System einzuführen. Weiterhin ist es Aufgabe der Erfindung ein einfaches Verfahren zur Erzeugung von Testsignalen innerhalb eines SDH-Netzes zur Verfügung zu stellen, das unabhängig von der Art der verwendeten Fehlerkorrekturfunktion FEC der Netzelemente ist und ohne Leitungen zwischen Netzelementen zu trennen.

Die Aufgabe zur Entwicklung eines Netzelementes und eines SDH-Netzes wird durch die Merkmale der unabhängigen Vorrichtungsansprüche, die Aufgabe zur Entwicklung eines Verfahrens wird durch die Merkmale des unabhängigen Verfahrensanspruches gelöst.

Demgemäss schlägt der Erfinder vor, ein Netzelement eines SDH-Netzes, zur Weiterleitung von, vorzugsweise hochbitratigen, Signalen, wobei das Netzelement einen empfangsseitigen Eingang, einen sendeseitigen Ausgang, und mindestens eine Überwachungsvorrichtung aufweist, die einen Fehler eines Signals erkennt und diesen Fehler meldet, indem ein Alarm ausgegeben wird, dahingehend weiterzuentwickeln, dass das Netzelement sendeseitig mindestens eine Vorrichtung zur Erzeugung von Testsignalen aufweist, die in die, vorzugsweise hochbitratigen, Signale eingeblendet werden. Es wird also nicht, wie bei SDH-Analysern, das komplette SDH-Signal erzeugt, sondern lediglich Testsignale von einem Netzelement aus in ein SDH-Sendesignal eingeblendet beziehungsweise ein bestehendes Signal manipuliert. Dies ist vor allem bei hohen Bitraten (Übertragungsraten) vorteilhaft. Beispielsweise kann die Vorrichtung zur Erzeugung von Testsignalen ein Programmodul und eine Software darstellen.

Hierdurch wird erreicht, dass keine zusätzlichen Komponenten zur Testsignalgenerierung benötigt werden, um das SDH-Netz beziehungsweise Komponenten des SDH-Netzes zu überprüfen, da das Netzelement selbst das Testsignal generiert. Darüber hinaus ist die Einblendung des Testsignals des erfindungsgemäßen Netzelementes unabhängig von der Art der verwendeten FEC.

Eine besonders vorteilhafte Ausgestaltung des erfindungsgemäßen Netzelementes sieht vor, dass die Vorrichtung zur Erzeugung von Testsignalen derart ausgestaltet ist, dass MS-Overhead-Bytes und/oder RS-Overhead-Bytes beeinflußt werden. So können in einem sendeseitigen Digitalteil des Netzelementes durch eine Softwaresteuerung gezielt Bytes des RS-Overheads beziehungsweise des MS-Overheads des SDH-Rahmens verändert werden, um Testsignale zu erzeugen.

In einer vorteilhaften Ausgestaltung des erfindungsgemäßen Netzelementes stellen die Testsignale künstliche Fehler dar, um Reaktionen, beispielsweise eines weiteren Netzelementes, zu testen, dem das Testsignal beziehungsweise der Fehler zugeleitet wird.

Eine andere Ausführung des erfindungsgemäßen Netzelementes sieht vor, dass das Netzelement derart ausgestaltet ist, dass als Testsignale die Fehler B1 und/oder B2 eingeblendet werden. Hierbei gibt B1 die Parität des gesendeten Signals an. Die Parität wird dabei über den kompletten Rahmen des SDH-Signals gebildet. Bei einer Fehlereinblendung wird gezielt das B1-Byte verändert, um einen Paritätsfehler auf der RS-Ebene (RS = Regenerator-Section) vorzutäuschen. Auch B2 gibt die Parität des gesendeten Signals an. Jedoch wird hier die Parität über den gesamten Rahmen des SDH-Signals mit Ausnahme der ersten 3 Zeilen des Section-Overheads (SOH) gebildet. Um also bei dem Netzelement, dem das Testsignal zugeleitet wird, einen Paritätsfehler auf der MS-Ebene (MS = Multiplex-Section) vorzutäuschen, werden gezielt B2-Bytes verändert.

Erkennt ein Netzelement einen ihm zugeleiteten B2-Fehler, teilt es die Anzahl der Fehler mittels MS-REI (REI = Remote Error Indicator) demjenigen Netzelement mit, das den Fehler gesendet hat, indem ein M1-Byte verändert wird. In dem M1-Byte stehen also die Anzahl der Fehler. Somit weiß das sendende Netzelement, mit welcher Güte sein Signal angekommen ist. Das erfindungsgemäße Netzelement kann nun vorzugsweise derart ausgestaltet sein, dass als eingeblendeter Fehler MS-REI vorgesehen ist. Hierbei wird gezielt das M1-Byte verändert, um einen Fehler vorzutäuschen und so die Reaktion des Netzelementes zu testen, das diesen Fehler zugeleitet bekommt.

In einer anderen Ausgestaltung des erfindungsgemäßen Netzelementes stellen die Testsignale Alarme dar. Auch diese Alarme werden künstlich zu den hochbitratigen Signalen eingeblendet.Die von dem Netzelement erzeugten Alarme können zum Beispiel dazu dienen, zu testen, ob eine korrekte Reaktion auf diese Alarme auftritt. Es wird also immer die Reaktion desjenigen Netzelementes (Gegenseite) getestet, dem ein Testsignal (Alarm oder Fehler) zugeführt wird.

Eine vorteilhafte Weiterentwicklung des erfindungsgemäßen Netzelementes sieht vor, dass zum Beispiel die Alarme LOF (Loss of Frame) und/oder MS-RDI (MS Remote Defect Indication) und/oder MS-AIS (MS Alarm Indication Signal) vorgesehen sind. LOF ist hierbei ein Zustand an dem Empfänger des Netzelementes oder ein übertragenes Wartungssignal, mit dem angezeigt wird, daß die Empfangsstation die Rahmenbeschreibung (Frame-Beschreibung) des Signals verloren hat. Diese Rahmenbeschreibung steht in den RS-Overhead-Bytes A1 und A2 und dient den Netzelementen dazu, den Beginn des SDH-Rahmens zu finden. Die Erfindung sieht vor, daß das sendende Netzelement gezielt den Alarm LOF ausgibt, so daß die Reaktion der Gegenseite hierauf getestet werden kann.

Das Alarm-Indikationssignal AIS ist ein Überwachungssignal in der SDH-Technik. Sobald ein Übertragungsfehler erkannt wird, sendet das Netzelement, das den Fehler erkannt hat, das AIS-Signal anstelle des gestörten Signals in Datenflußrichtung und zeigt damit die Fehlermeldung an. Bei diesem Alarm-Indikationssignal werden die Bits 6-8 eines K2-Bytes des MS-Overheads auf 1 gesetzt.

Erkennt ein Netzelement einen Alarm, zum Beispiel MS-AIS oder LOF, dann teilt es dies mittels MS-RDI dem Netzelement mit, dass das fehlerhafte Signal gesendet hat. Somit weiß das sendende Netzelement, ob das eigene gesendete Signal fehlerfrei bei der Gegenseite angekommen ist. Bei MS-RDI wird ein K2-Byte in den Bitpositionen 6-8 mit 110 gefüllt. Das erfindungsgemäße Netzelement enthält also eine Vorrichtung, die 110 in den Bitpositionen 6-8 des K2-Bytes einsetzt, um der Gegenseite einen Alarm vorzutäuschen. Als Reaktion der Gegenseite wird bei einer fehlerfreien Funktion der Alarm MS-RDI ausgegeben.

Eine vorteilhafte Weiterentwicklung des erfindungsgemäßen Netzelementes sieht vor, dass das Testsignal einen Timingmarker mit beliebigem Inhalt darstellt. Der Timingmarker gibt die Frequenzgenauigkeit eines SDH-Signals an und wird im S1-Byte des MS-Overheads übertragen. Er kann die Werte 00, 02, 04, 08, 0B, 0F einnehmen, wobei die erfindungsgemäße Ausgestaltung alle Werte von 00 bis 0F zulässt. Damit können sowohl gültige als auch ungültige Werte in das Testsignal eingespeist werden. Ein Netzelement kann aus dem ankommenden SDH-Signal den Takt zurückgewinnen und zur Generierung des Sendetaktes für die abgehenden Signale verwenden. Dabei ist es erforderlich, dass ein SDH-Signal mit möglichst hoher Frequenzgenauigkeit verwendet wird. Durch die Auswertung des Timingmarkers kann das Netzelement dann das Eingangssignal mit der besten Taktgüte verwenden. Die Erfindung sieht vor, den Timingmarker auf einen bestimmten, zuvor festgelegten, Wert zu setzen, um bei dem empfangenden Netzelement das Verhalten der Taktauswahl zu prüfen.

In einer weiteren Ausführung des erfindungsgemäßen Netzelementes ist eine Vorrichtung vorgesehen, die ein Zufallssignal (PRBS = Pseudo Random Binary Sequence) generiert, das als Nutzinhalt übertragen wird. Bei einem Aufbau oder einer Veränderung eines SDH-Netzes stehen noch keine realen Nutzsignale zur Verfügung. Die Netzelemente geben daher SDH-Signale ab, die zwar einen SDH-Rahmen und Overhead haben, deren Nutzinhalt jedoch leer ist. Daher wird vorgeschlagen, dass das Netzelement selbst ein Zufallssignal erzeugt, beispielsweise PRBS 2Exp31-1, mit dem der Nutzinhalt gefüllt wird.

In einer Weiterentwicklung des erfindungsgemäßen Netzelementes ist die Vorrichtung zur Erzeugung eines Zufallssignals als rückgekoppeltes Schieberegister ausgestaltet. Somit kann die Übertragungsqualität mit realitätsnahen Signalen (Zufallssignal PRBS) vorab geprüft werden. Unabhängig hiervon kann die Gegenstelle durch Auswertung der B1 oder B2-Bytes die Anzahl möglicher Übertragungsfehler erkennen und das PRBS-Signal bewerten.

In einer weiteren vorteilhaften Ausgestaltung ist mindestens eine Schnittstelle vorgesehen, über die das Netzelement angesteuert wird. Diese Schnittstelle kann das Netzelement beispielsweise mit einem Steuerrechner verbinden, der das erfindungsgemäße Netzelement ansteuert. Vorzugsweise werden die Netzelemente eines SDH-Netzes von einer Zentrale aus mit Hilfe einer Fernsteuerung gesteuert. Die Steuerinformation wird dabei im RS/MS-Overhead übertragen. Das Einschalten der Testsignale beziehungsweise die Einblendung von Alarmen und Fehlern in SDH-Signale, kann in vorteilhafter Weise auch von der Zentrale aus über diese Fernsteuerung erfolgen. Auch die Meldungen der Netzelemente, die diese SDH-Signale, in die Testsignale eingeblendet wurden, empfangen, erfolgt vorzugsweise über die Fernsteuerung zu der Zentrale.

Darüber hinaus schlägt der Erfinder vor, ein SDH-Netz, mit einer Vielzahl von Netzelementen, mit einem empfangsseitigen Eingang und einem sendeseitigen Ausgang, wobei die Netzelemente über Datenleitungen miteinander verbunden sind, und einem Mittel zur Einspeisung von Testsignalen in den Empfangsweg der Netzelemente, dahingehend weiterzuentwickeln, dass das Mittel zur Einspeisung der Testsignale als mindestens ein Netzelement, mit zumindest einem der Merkmale, wie voranstehend beschrieben, ausgestaltet ist.

Hierdurch wird erreicht, dass für eine Überprüfung des SDH-Netzes keine umständlichen und komplizierten Umbaumaßnahmen nötig sind und das überprüfte SDH-Netz sofort nach einem Test wieder einsatzbereit ist, ohne beispielsweise einzelne Verbindungen zwischen den Netzelementen des SDH-Netzes wiederherzustellen.

In einer vorteilhaften Ausgestaltung des erfindungsgemäßen SDH-Netzes ist mindestens eine Verbindung zur Rückführung des Testsignals von einem sendeseitigen Ausgang eines Netzelementes zu einem empfangsseitigen Eingang des selben und/oder eines weiteren Netzelementes vorgesehen. Das Testsignal, das von mindestens einem Netzelement in das SDH-Sendesignal eingeblendet wird, kann nun durch eine äußere Rückführung (externe Schleife) zum Test sowohl seiner eigenen als auch der Empfangsseite anderer Netzelemente des SDH-Netzes verwendet werden. In gleicher Weise kann dieses Testsignal auch zu mindestens einem weiteren SDH-Netz geführt werden, um dessen Netzelemente und deren Reaktionen zu testen.

Der Erfinder schlägt weiterhin vor, ein Verfahren zur Erzeugung von Testsignalen innerhalb eines SDH-Netzes, wobei die Testsignale mindestens einem Netzelement des SDH-Netzes zugeleitet werden, dahingehend weiterzuentwickeln, daß mindestens ein Netzelement in ein, vorzugsweise hochbitratiges, Signal ein Testsignal einblendet, indem MS-Overhead-Bytes und/oder RS-Overhead-Bytes des, vorzugsweise hochbitratigen, Signals beeinflußt werden und/oder als Testsignal ein Zufallssignal generiert wird, das als Nutzinhalt des, vorzugsweise hochbitratigen, Signals übertragen wird.

Hierdurch wird erreicht, dass, ohne ein externes System in das SDH-Netz einzufügen, auf einfache Weise und unabhängig von der Art der verwendeten FEC der Netzelemente, Testsignale zur Verfügung gestellt werden, um das SDH-Netz oder einzelne Komponenten des SDH-Netzes zu überprüfen. Die Beeinflussung der MS- beziehungsweise der RS-Overhead-Bytes kann mit entsprechenden Vorrichtungen sendeseitig, innerhalb des Netzelementes, die Erzeugung des Zufallssignals mit Hilfe eines rückgekoppelten Schieberegisters durchgeführt werden.

Eine Weiterentwicklung des erfindungsgemäßen Verfahrens sieht vor, daß als Testsignale Fehler und/oder Alarme erzeugt werden. Beispielsweise können als Fehler B1, B2 und MS-REI und als Alarme LOF, MS-RDI und MS-AIS erzeugt beziehungsweise verändert werden.

Weiterhin kann als Testsignal ein Timingmarker mit beliebigem Inhalt erzeugt wird, wobei der Timingmarker die Frequenzgenauigkeit eines SDH-Signals angibt. Wird der Timingmarker auf einen bestimmten Wert gesetzt, kann bei dem empfangenden Netzelement das Verhalten der Taktauswahl geprüft werden.

Besonders vorteilhaft kann das erfindungsgemäße Verfahren sowohl bei einem Systemtest, also in der Entwicklungsphase, als auch beim Einrichten und beim Verändern eines SDH-Netzes verwendet werden. Darüber hinaus ist das erfindungsgemäße Verfahren und die erfindungsgemäßen Vorrichtungen bei der Fehlersuche hilfreich.

Weitere Merkmale der Erfindung ergeben sich aus der nachfolgenden Beschreibung der Ausführungsbeispiele unter Bezugnahme auf die Zeichnungen.

Im folgenden wird die Erfindung anhand der Zeichnungen näher beschrieben. Es zeigen:
- Figur 1:: Ausschnitt des erfindungsgemäßen Netzelementes;
- Figur 2:: erfindungsgemäße SDH-Netze mit äußerer Rückführung von Testsignalen.

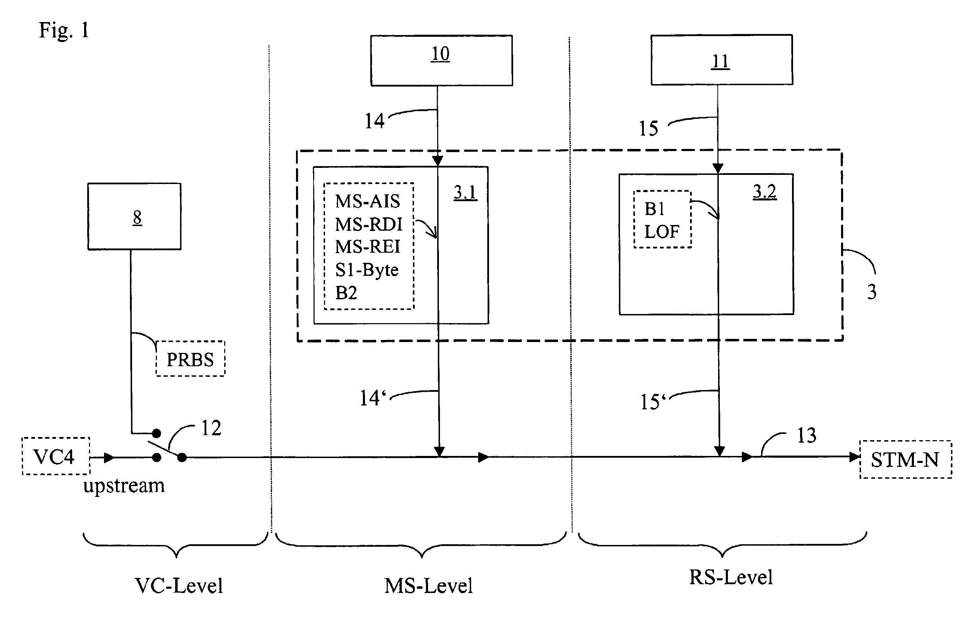

Die Figur 1 zeigt einen Ausschnitt eines erfindungsgemäßen Netzelementes, das eine Vorrichtung 3 aufweist, die Testsignale erzeugt, die in vorzugsweise hochbitratige Sendesignale STM-N eingeblendet werden, wobei N für die Vielzahl möglicher Übertragungsraten steht. Beispielsweise können als Sendesignale STM-16 oder STM-256 verwendet werden.

In einem SDH-Netz wird das Sendesignal STM-N in SDH-Rahmen übertragen, der unterschiedliche Blöcke und Ebenen enthält. Das Sendesignal STM-N kann hierbei auf den verschiedenen Ebenen beeinflußt werden, zum Beispiel auf der Ebene des Virtuellen Containers (VC-Level), der die Nutzdaten trägt, auf der Multiplexer-Ebene (MS-Level), sowie auf der Regenerator-Ebene (RS-Level).

Alle Blöcke befinden sich in dem Sendezweig eines Netzelementes. Beim Aufbau des STM-N Signals, dargestellt durch den Pfeil 13, durchläuft das Signal den VC-Level, den MS-Level und den RS-Level. Es wird davon ausgegangen, daß ein Signal VC4 (Virtual Container Level 4) auf der linken Seite eintritt und als STM-N auf der rechten Seite das Netzelement verläßt und zu einem anderen Netzelement geführt wird.

Eine MS-Terminierung 10 generiert die MS-Overhead-Bytes 14, eine RS-Terminierung 11 generiert die RS-Overhead-Bytes 15. Die Vorrichtung 3 zur Erzeugung von Testsignalen enthält die Vorrichtungen 3.1 und 3.2, wobei die Vorrichtung 3.1 die MS-Overhead-Bytes 14, die Vorrichtung 3.2 die RS-Overhead-Bytes 15 beeinflußt, so dass die künstlich beeinflussten Overhead-Bytes 14' und 15' für den Aufbau des Signals STM-N verwendet werden. Zum Beispiel können die Vorrichtung 3.1 die MS-Overhead-Bytes MS-AIS, MS-RDI, MS-REI, das S1-Byte und die B2-Bytes und die Vorrichtung 3.2 die RS-Overhead-Bytes B1 und LOF derart verändern, dass künstliche Fehler oder Alarme generiert und in das Sendesignal STM-N eingeblendet werden können.

Auf der Ebene des Virtueller Containers (VC-Level) kann mit Hilfe einer Vorrichtung 8 ein Zufallssignal PRBS generiert, und über einen Schalter 12, der ferngesteuert wird, dem Sendesignal STM-N als Nutzinhalt in den Virtuellen Container geschrieben werden.

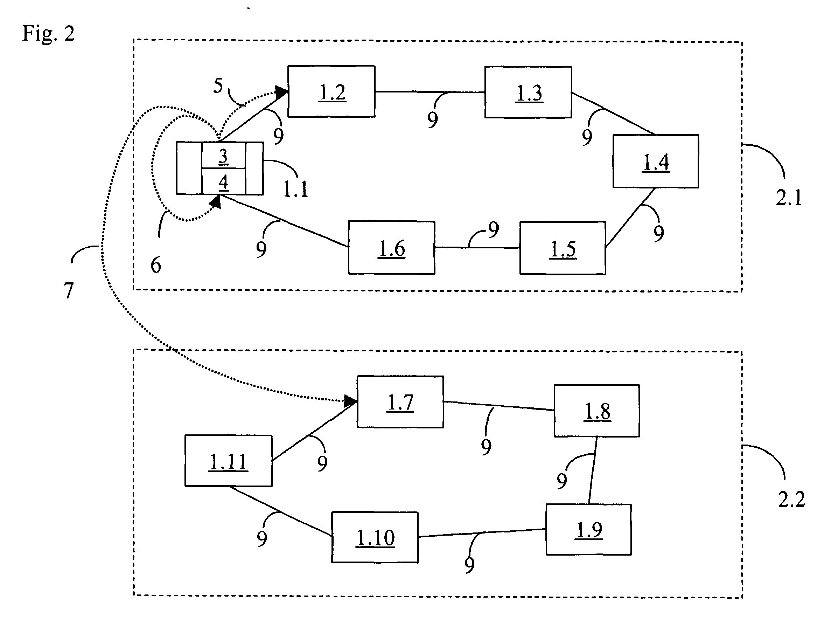

Die Figur 2 zeigt in einem bevorzugten Ausführungsbeispiel zwei erfindungsgemäße SDH-Netze 2.1 und 2.2. Das SDH-Netz 2.1 enthält die Netzelemente 1.1 bis 1.6, das SDH-Netz 2.2 die Netzelemente 1.7 bis 1.11, wobei die Netzelemente 1.X innerhalb eines SDH-Netzes 2.1 oder 2.2 miteinander über Datenleitungen 9 verbunden sind.

Mindestens eines der Netzelemente 1.X enthält sendeseitig mindestens eine Vorrichtung 3 zur Erzeugung von Testsignalen. In der Figur 1 ist dies beispielhaft an dem Netzelement 1.1 gezeigt, wobei auch die anderen Netzelemente 1.2 bis 1.11 derart erfindungsgemäß ausgestaltet sein können. Darüber hinaus enthält das Netzelement 1.1 empfangsseitig eine Überwachungsvorrichtung 4, die einen Fehler eines ihm auf der Datenleitung 9 zugeleiteten Signals erkennt, und diesen Fehler meldet, indem ein Alarm ausgegeben wird.

Weiterhin sind Verbindungen vorgesehen, dargestellt als gepunktete Pfeile 5, 6 und 7, die das Testsignal von dem sendeseitigen Ausgang des Netzelementes 1.1 einem empfangsseitigen Eingang eines Netzelementes 1.X rückführen. Über die Verbindung 6 werden die generierten Testsignale des Netzelementes 1.1 der eigenen Empfangsseite und über die Verbindung 5 einer Empfangsseite eines anderen Netzelementes 1.2 bis 1.6 des SDH-Netzes 2.1, hier dem Netzelement 1.2, zugeleitet. Darüber hinaus können die Testsignale des Netzelementes 1.1 einem Netzelement 1.7 bis 1.11 eines weiteren SDH-Netzes 2.2 zugeleitet werden, wobei in der Figur 2 das Testsignal dem Netzelement 1.7 über die Verbindung 7 zugeleitet wird.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird durch die Erfindung ein Netzelement und ein SDH-Netz vorgestellt, das es ermöglicht, auf einfache Weise eine Überprüfung des SDH-Netzes durchzuführen, ohne eine zusätzliche Komponente in das System einzuführen. Darüber hinaus wird ein einfaches Verfahren zur Erzeugung von Testsignalen innerhalb eines SDH-Netzes vorgestellt, ohne zusätzliche Komponenten zu benötigen und ohne Leitungen zwischen Netzelementen zu trennen.

## Patentansprüche

1. Netzelement (1.1-1.11) eines SDH-Netzes (2.1, 2.2) zur Weiterleitung von hochbitratigen Signalen, wobei das Netzelemente (1.1-1.11) einen empfangsseitigen Eingang, mindestens eine Vorrichtung (8, 3.1, 3.2) zur Erzeugung von Testsignalen jeweils mit unterschiedlichen generierten Fehlern, einen sendeseitigen Ausgang, und mindestens eine Überwachungsvorrichtung (4) zur Erkennung eines Fehlers eines Signals und zur Meldung dieses Fehlers durch Ausgabe einer Alarm aufweist,
**dadurch gekennzeichnet, dass** die Vorrichtung (8, 3.1, 3.2) zur Erzeugung von Testsignalen derart ausgestaltet ist,
dass wenigstens zwei unterschiedliche Fehler in die hochbitratigen Signale eingeblendet werden.

2. Netzelement gemäß dem voranstehenden Anspruch 1, wobei
die Vorrichtung (8, 3.1, 3.2) derart ausgestaltet ist, dass die Erzeugung von Testsignalen in der MS-Overhead-Ebene (14) und/oder in der RS-Overhead-Ebene (15) erfolgt.

3. Netzelement gemäß dem voranstehenden Anspruch 1 oder 2, wobei
als Fehler B1 und/oder B2 und/oder MS-REI vorgesehen sind.

4. Netzelement gemäß einem der voranstehenden Ansprüche 1 bis 3, wobei
die Testsignale Alarme darstellen.

5. Netzelement gemäß dem voranstehenden Anspruch 4, wobei
als Alarme LOF und/oder MS-RDI und/oder MS-AIS vorgesehen sind.

6. Netzelement gemäß einem der voranstehenden Ansprüche, wobei
das Testsignal einen Timingmarker mit beliebigem Inhalt darstellt.

7. Netzelement gemäß einem der voranstehenden Ansprüche wobei die Vorrichtung (8, 3.1, 3.2) zur Erzeugung von Testsignalen derart ausgestaltet ist, dass
ein Zufallssignal generiert und als Nutzinhalt übertragen wird.

8. Netzelement gemäß dem voranstehenden Anspruch 7, wobei
die Vorrichtung (8, 3.1, 3.2) ein rückgekoppeltes Schieberegister (8) darstellt.

9. SDH-Netz (2.1, 2.2) mit einer Vielzahl von Netzelementen (1.1-1.11)
mit einem empfangsseitigen Eingang und einem sendeseitigen Ausgang, wobei die Netzelementen (1.1-1.11) über Datenleitungen (9) miteinander verbunden sind, und einem Mittel (3) zur Einspeisung von Testsignalen in den Empfangsweg der Netzelemente,
**dadurch gekennzeichnet,**
**dass** das Mittel (3) zur Einspeisung der Testsignale als die Vorrichtung (8, 3.1, 3.2) zur Erzeugung von Testsignalen gemäß einem der voranstehenden Ansprüche ausgestaltet ist.

10. SDH-Netz gemäß dem voranstehenden Anspruch 9, wobei
mindestens eine Verbindung (5, 6, 7) zur Rückführung des Testsignals von einem sendeseitigen Ausgang eines Netzelementes (11-1.11) zu einem empfangsseitigen Eingang des selben und/oder eines weiteren Netzelementes (1.1-1.11) vorgesehen ist.

11. Verfahren zur Erzeugung von Testsignalen innerhalb eines SDH-Netzes (2.1, 2.2), wobei die Testsignale mindestens
einem Netzelement (1.1-1.11) des SDH-Netze (2.1,2-2) zugeleitet oder weitergesendet werden und deren Inhalte in einer von Fehler detektierenden bzw. generierenden Ebenen in einem Netzelement (1.1-1.11) empfangseitig überwacht und/oder sendeseitig generiert werden,
**dadurch gekennzeichnet,**
**dass** der Inhalt eines Testsignals mit wenigstens zwei generierten Fehlern von einem Netzelement (1.1-1.11) in ein hochbitratiges Nutzsignal eingeblendet wird, derart dass MS-Overhead-Bytes (14) und/oder RS-Overhead-Bytes (15) des hochbitratigen Nutzsignals beeinflußt werden und/oder als Testsignal ein Zufallssignal generiert wird, das als Nutzinhalt des hochbitratigen Nutzsignals übertragen wird.

12. Verfahren gemäß dem voranstehenden Anspruch 11, wobei
als Testsignal Alarme erzeugt werden.

13. Verfahren gemäß einem der voranstehenden Ansprüche 11 bis 12, wobei
als Testsignal ein Timingmarker mit beliebigem Inhalt erzeugt wird.

14. Verfahren gemäß einem der voranstehenden Ansprüche 11 bis 13, wobei
die Testsignale in regelmäßigen Abständen erzeugt werden.

## Claims

1. Network element (1.1 - 1.11) of an SDH network (2.1, 2.2) for forwarding high bit rate signals, the network element (1.1 - 1.11) having a receive side input, at least one device (8, 3.1, 3.2) for generating test signals, each with different generated errors, a transmit side output and at least one monitoring device (4) for identifying an error in a signal and to report said error by emitting an alarm,
**characterised in that** the device (8, 3.1, 3.2) for generating test signals is configured such that at least two different errors are inserted into the high bit rate signals.

2. Network element according to the preceding claim 1,
the device (8, 3.1, 3.2) being configured such that test signals are generated in the MS overhead level (14) and/or in the RS overhead level (15).

3. Network element according to the preceding claim 1 or 2, with B1 and/or B2 and/or MS-REI being provided as errors.

4. Network element according to one of the preceding claims 1 to 3, with the test signals representing alarms.

5. Network element according to the preceding claim 4, with LOF and/or MS-RDI and/or MS-AIS being provided as alarms.

6. Network element according to one of the preceding claims, with the test signal representing a timing marker with any content.

7. Network element according to one of the preceding claims, with the device (8, 3.1, 3.2) for generating test signals being configured such that a random signal is generated and transmitted as useful content.

8. Network element according to the preceding claim 7,
with the device (8, 3.1, 3.2) representing a feedback shift register (8).

9. SDH network (2.1, 2.2) with a plurality of network elements (1.1 - 1.11), with a receive side input and a transmit side output, the network elements (1.1 - 1.11) being connected together by way of data lines (9) and a means (3) for injecting test signals into the receive path of the network elements,
**characterised in that**
the means (3) for injecting test signals is configured as the device (8, 3.1, 3.2) for generating test signals according to one of the preceding claims.

10. SDH network according to the preceding claim 9,
with at least one connection (5, 6, 7) being provided to feed the test signal back from a transmit side output of a network element (1.1 - 1.11) to a receive side input of the same and/or a further network element (1.1 - 1.11).

11. Method for generating test signals within an SDH network (2.1, 2.2), with the test signals being routed or forwarded to at least one network element (1.1 - 1.11) of the SDH network (2.1, 2.2) and their content being monitored on the receive side and/or generated on the transmit side in one of the error-detecting or error-generating levels in a network element (1.1 - 1.11),
**characterised in that**
the content of a test signal with at least two generated errors from a network element (1.1 - 1.11) is inserted into a high bit rate useful signal, such that MS overhead bytes (14) and/or RS overhead bytes (15) of the high bit rate useful signal are influenced and/or a random signal is generated as a test signal and is transmitted as useful content of the high bit rate useful signal.

12. Method according to the preceding claim 11,
with alarms being generated as the test signal.

13. Method according to one of the preceding claims 11 to 12, with a timing marker with any content being generated as a test signal.

14. Method according to one of the preceding claims 11 to 13, with the test signals being generated at regular intervals.

## Revendications

1. Élément de réseau (1.1-1.11) d'un réseau SDH (2.1, 2.2) destiné à transmettre des signaux à débit binaire élevé, l'élément de réseau (1.1-1.11) comportant une entrée du côté réception, au moins un dispositif (8, 3.1, 3.2) permettant de générer des signaux de test comportant chacun des erreurs générées différentes, une sortie du côté émission, et au moins un dispositif de surveillance (4) permettant de détecter une erreur d'un signal et de signaler cette erreur en délivrant une alarme,
**caractérisé en ce que** le dispositif (8, 3.1, 3.2) permettant de générer des signaux de test est conformé de telle sorte que au moins deux erreurs différentes sont insérées dans les signaux à débit binaire élevé.

2. Élément de réseau selon la revendication précédente 1, dans lequel le dispositif (8, 3.1, 3.2) est conformé de telle sorte que la génération de signaux de test est effectuée au niveau MS-Overhead (14) et/ou au niveau RS-OverHead (15).

3. Élément de réseau selon la revendication précédente 1 ou 2, dans lequel B1 et/ou B2 et/ou MS-REI sont prévus comme erreurs.

4. Élément de réseau selon l'une des revendications précédentes 1 à 3, dans lequel les signaux de test sont des alarmes.

5. Élément de réseau selon la revendication précédente, dans lequel LOF et/ou MS-RDI et/ou MS-AIS sont prévus comme alarmes.

6. Élément de réseau selon l'une des revendications précédentes, dans lequel le signal de test est un marqueur de synchronisation à contenu quelconque.

7. Élément de réseau selon l'une des revendications précédentes, dans lequel le dispositif (8, 3.1, 3.2) permettant de générer des signaux de test est conformé de telle sorte qu'un signal aléatoire est généré et transmis comme contenu utile.

8. Élément de réseau selon la revendication précédente 7, dans lequel le dispositif (8, 3.1, 3.2) est un registre à décalage à boucle fermée (8).

9. Réseau SDH (2.1, 2.2) comprenant un grand nombre d'éléments de réseau (1.1-1.11) comportant une entrée du côté réception et une sortie du côté émission, les éléments de réseau (1.1-1.11) étant reliés entre eux et à un moyen (3) permettant d'introduire des signaux de test dans la voie de réception des éléments de réseau par le biais de lignes de données (9),
**caractérisé en ce que** le moyen (3) permettant d'introduire des signaux de test est conformé en dispositif (8, 3.1, 3.2) permettant de générer des signaux de test selon l'une des revendications précédentes.

10. Réseau SDH selon la revendication précédente 9, dans lequel au moins une liaison (5, 6, 5) est prévue pour ramener le signal de test d'une sortie du côté émission d'un élément de réseau (1.1-1.11) à une entrée du côté réception du même et/ou d'un autre élément de réseau (1.1-1.11).

11. Procédé de génération de signaux de test à l'intérieur d'un réseau SDH (2.1, 2.2) dans lequel les signaux de test sont amenés ou renvoyés à au moins un élément de réseau (1.1-1.11) du réseau SDH (2.1, 2.2) et leur contenu sont surveillés du côté réception et généré du côté émission dans l'un des niveaux de détection respectivement de génération d'erreurs dans un élément de réseau (1.1-1.11),
**caractérisé en ce que** le contenu d'un signal de test comportant au moins deux erreurs générées est inséré par un élément de réseau (1.1-1.11) dans un signal utile à débit binaire élevé de façon à influer sur des octets MS-Overhead (14) et/ou des octets RS-Overhead (15) du signal utile à débit binaire et/ou à générer un signal aléatoire sous la forme d'un signal de test qui est transmis comme contenu utile du signal utile à débit binaire élevé.

12. Procédé selon la revendication précédente 11, dans lequel des alarmes sont générées comme signal de test.

13. Procédé selon l'une des revendications précédentes 11 à 12, dans lequel un marqueur de synchronisation à contenu quelconque est généré comme signal de test.

14. Procédé selon l'une des revendications précédentes 11 à 13, dans lequel les signaux de test sont générés à intervalles réguliers.
